(19) Europäisches Patentamt
European Patent Office
Office européen des brevets

(11) **EP 3 955 076 A1**

(12) **EUROPEAN PATENT APPLICATION**

(43) Date of publication:
**16.02.2022 Bulletin 2022/07**

(51) International Patent Classification (IPC):
**G05B 23/02** *(2006.01)*

(21) Application number: **20190284.8**

(52) Cooperative Patent Classification (CPC):
**G06N 20/10; G05B 23/0254**

(22) Date of filing: **10.08.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Feng, Jing
  Beijing, P.R.China, 100102 (CN)**
• **Lavrik, Vladimir
  63303 Dreieich (DE)**
• **Meng, Yang Qiao
  Beijing, P.R.China, 100102 (CN)**
• **Paulitsch, Christoph
  76199 Karlsruhe (DE)**

(54) **SYSTEM, DEVICE AND METHOD OF DETECTING ABNORMAL DATAPOINTS**

(57)     System, Device and Method of detecting at least one abnormal datapoint in operation data (U) associated with an industrial environment (610) is disclosed. The method comprising iteratively applying one or more anomaly detection models (fi) to at least one subset (S) of the operation data (U), wherein the anomaly detection models (fi) are trained based on a training dataset (L) consisting of datapoints labeled as normal; classifying subset-datapoints in the subset (S) as one of normal datapoints (N) and abnormal datapoints (A) using the anomaly detection models (fi); updating the training dataset at least with the normal datapoints; retraining the anomaly detection models (fi) with the updated training dataset after expiration of a threshold time, wherein the threshold time is based on the number of updates to the training dataset; and detecting the at least one abnormal datapoint in the operation data (U) using the anomaly detection models (f'i).

FIG 1

EP 3 955 076 A1

**Description**

The present invention relates to detecting abnormal datapoints in operation data associated with an industrial environment.

Anomaly detection may typically require an anomaly detection model that is trained to detect aspects of usage or operation of an industrial asset. For example, motor failure detection relies on model trained with failure specific features generated based on domain expert knowledge on measured operation data from motor inverters. The operation data may be measured as a time series where data from specific sensors from e.g. a motor inverter is sampled at a certain frequency. In some cases, the operation data may be time series data stored and analyzed in batches. The models and thresholds may need to be trained on motor data in the normal and failure cases for each operation condition. In order to reduce training effort artificial intelligence techniques may be used.

Existing anomaly detection models may focus on detecting abnormal datapoints in the future with a large amount of normal data (only one class) available for training. Further, existing artificial intelligence techniques may focus on classifying data in the future while only handful multi-class training data are available. Accordingly, the artificial intelligence techniques may require trained datasets with a considerable amount of pre-labelled data. However, learning techniques with a large amount of unlabeled datapoints and only few datapoints labeled as normal or abnormal may not enable effective detection of anomalies or abnormal datapoints. Further, reliance on an expert to validate the detection of abnormal datapoints may increase.

Therefore, the systems, devices and methods for detecting abnormal datapoints may benefit from improvements. The object of the present invention is to effectively detect abnormal datapoints in operation data associated with an industrial environment. Particularly, the object of the invention is to be able to detect abnormal datapoints in large unlabeled datasets.

The object is achieved by a predictive maintenance system, a computing device and a method of detecting at least one abnormal datapoint in operation data associated with an industrial environment.

For example, the method of detecting at least one abnormal datapoint in operation data associated with an industrial environment, wherein the operation data comprises historical data and streaming data corresponding to operation of industrial assets in the industrial environment comprises applying one or more anomaly detection models to at least one subset of the operation data, wherein the anomaly detection models are trained based on a training dataset consisting of datapoints labeled as normal; classifying subset-datapoints in the subset as one of normal datapoints and abnormal datapoints using the anomaly detection models; updating the training dataset at least with the normal datapoints; retraining the anomaly detection models with the updated training dataset after expiration of a threshold time, wherein the threshold time is based on the number of updates to the trained dataset; and detecting the at least one abnormal datapoint in the industrial environment using the anomaly detection models.

In an embodiment, the method of detecting at least one abnormal datapoint in operation data associated with an industrial environment may comprise iteratively applying one or more anomaly detection models to at least one subset of the operation data, wherein the anomaly detection models are trained based on a training dataset consisting of datapoints labeled as normal; iteratively classifying subset-datapoints in the subset as one of normal datapoints and abnormal datapoints using the anomaly detection models; iteratively updating the training dataset at least with the datapoints classified as normal; iterating application of the anomaly model, classification and dataset update for the complete operation data or until a threshold time has been reached; retraining the anomaly detection models with the updated training dataset after expiration of the threshold time, wherein the threshold time is based on the number of updates to the trained dataset; and detecting the at least one abnormal datapoint in the industrial environment using the anomaly detection models by starting new iterations. Accordingly, the present invention includes iterative continuation of classification, update and retraining of the anomaly detection models.

In another example, a computing device for detecting at least one abnormal datapoint in operation data associated with an industrial environment, wherein the operation data comprises historical data and streaming data corresponding to operation of industrial assets in the industrial environment, the device comprises a processing unit; and an anomaly module executable by the processing unit comprising computer-readable instructions when executed by the processing unit is configured to perform the steps in one of the method disclosed herein.

In yet another example, the predictive maintenance system for an industrial environment comprises the computing device disclosed herein.

A further example includes a computer program product, comprising computer readable code, that when executed on a processor, performs any one of the method steps of one or more of the methods herein.

The present invention advantageously combines semi-supervised learning and anomaly detection. Accordingly, detecting abnormal datapoints is possible even if there is a small number of normal datapoints and a large number of unknown datapoints. Further, the present invention provides a workflow that can be executed in an online learning pipeline. The workflow enables continuous learning from unlabeled and labeled datapoints and automatic upgrade of the anomaly detection models. Therefore, the present invention has the technical effect of generating and maintaining robust anomaly detection models and learning pipelines for an industrial environment.

Before describing the suggested convention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "industrial environment" refers to a facility that for manufacture may be semi or completely automated. The industrial environment may be part of an automation environment. For example, industrial automation environment, laboratory automation environment, building automation environment and the like. Further, according to the present invention, automation environment may include a combination of one or more industrial automation environments, laboratory automation environments, building automation environments.

The industrial assets may be control devices, sensors, actuators that include a physical device and a digital model that can be used to configure and control the physical device. For example, Computer Numerical Control (CNC) machines, automation systems in an industrial production facility, motors, generators and the like. The industrial assets can also be referred to as a cyber-physical system as it includes the cyber-physical devices.

As used herein "operation data" is the data associated with the operation and operating conditions of the industrial assets. The operation data may be received from different sources (e.g., sensors, user devices, etc.). The sensors measure operating parameters associated with the asset. For example, the sensors may include thermal imaging devices, vibration sensors, current and voltage sensors, etc. The term "operation parameter" refers to one or more characteristics of the asset. Accordingly, the operation data is a measure of the operating parameters associated with the operation of the asset. For example, the operation data may include datapoints representing vibration, temperature, current, magnetic flux, velocity, power associated with the industrial asset such as motor, or a rotor in the industrial environment.

The operation data may be received and analyzed in real-time. Such operation data may be referred to as streaming data. As used herein "streaming data" refers to the datapoints that are received in timeseries. For example, the streaming data includes timeseries sensor values of vibration sensors of a motor. In another example, the operation data may be received and stored as batches. The operation data may be referred to as "historical data". For example, the historical data includes vibration sensor values from the motor for a month. As used herein "anomaly detection model" refers to one or more models that are generated from physics-based models and/or data driven models for the industrial asset and/or the industrial environment. For example, the anomaly detection models may include ontology-based models having ontological data of the industrial asset, prediction models with probabilistic data associated with condition-based probability. In an embodiment, the ontological data of the industrial asset is used to detect an anomaly based on asset properties and the interdependency between them in the ontological model. In another embodiment, the anomaly detection models include sliding window calculation, Fourier transform, applying low/high pass filters, neural nets, decision tree analysis and other techniques well-known in domains of digital signal processing, machine learning and automation engineering.

The anomaly detection models are trained based on the training dataset. The training dataset initially includes datapoints labelled as normal. Accordingly, when the anomaly detection models are applied to the subset of the operation data, classification of datapoints within the subset is possible. Further, the datapoints within the subset (subset-datapoints) are classified as normal datapoints or abnormal datapoints. The classification of the subset-datapoints enables labelling of unlabeled datapoints in the operation data. The labelling is used to update the training dataset. For example, the training dataset is updated only with the normal datapoints. In another example, the training dataset is updated with the abnormal datapoints and the normal datapoints. The update of the training dataset may be performed iteratively. When an iterative threshold i.e. the threshold time is satisfied the anomaly detection models are retrained based on the updated training dataset. The retraining of the anomaly detection models reinforces the classification performed on the subset-datapoints. Accordingly, the present invention advantageously automates the retraining of the anomaly detection models to detect at least one of abnormal datapoints in the operation data.

In an embodiment, the method may include removing the subset from the operation data and detecting the at least one abnormal datapoints in the remainder operation data without the subset using the retrained anomaly detection model. The method may further include applying anomaly detection models to a new subset of the operation data and classified new-datapoints in the new subset as one of the normal datapoints and the abnormal datapoints. Additionally, the method may include updating the training dataset and retraining the trained anomaly detection models as indicated herein above.

The present invention advantageously divides the operation data into subsets for effective and robust application of the anomaly detection models. Accordingly, the present invention may be implemented on computing devices with resource constraints. For example, an industrial computing device such as Edge device may be used to detect abnormal datapoints in the streaming data received from the industrial assets in the industrial environment. In an embodiment, the threshold time may be chosen for computational efficiency for implementation in real-time production setting and allow an automation engineer to provide inputs to the anomaly detection model. For example, the automation engineer may provide inputs regarding the number of datapoints within the subset or a confidence index in the classification of the subset-datapoints. Further, the division of the operation data into subsets enables continuous unsupervised/semi-supervised learning of the abnormal datapoints. Therefore, starting from a small set of known normal datapoints the present invention provides a methodology to classify and label the unknown datapoints in the operation data.

The method may also include populating an anomaly dataset containing the abnormal datapoints in the subset and the new subset. The anomaly dataset may be populated after classification of the datapoints in the subset of the new subset. The iterative population of the anomaly dataset enables continuous learning and retraining of the anomaly detection models. The method may further include updating the training dataset with the anomaly dataset. Therefore, the present invention advantageously provides a methodology of training the anomaly detection models with not only the normal datapoints (i.e. one class). But provides both the normal and the abnormal datapoints (i.e. multi class) for training the anomaly detection models. With increasing use of the present invention, the anomaly detection models may get further robust in view of the reinforced learning from the updated training dataset.

To ensure that the anomaly detection models do not need considerable retraining, the training dataset may be provided with the normal datapoints based on actions performed by an expert. Accordingly, the method may include receiving the training data set comprising at least the normal datapoints, wherein the normal datapoints are classified based on at least one of engineering software input and operation of a comparable industrial environment. The engineering software input may be provided by monitoring actions of an automation engineer while configuring the industrial asset. For example, the automation engineer may set boundary conditions for vibration sensor data of a motor in the industrial environment. The datapoints falling within the boundary conditions are automatically classified as the normal datapoints. Therefore, the present invention advantageously incorporates expert input seamlessly without explicit prompt. In addition, the expert input may have been provided much earlier in the life cycle of the industrial asset. In another example, the comparable industrial environment may include a comparable motor with similar operating conditions. The normal datapoints in operation data of the comparable motor is used as the training dataset. Therefore, the present invention advantageously uses existing labeled data to train the anomaly detection model.

In an embodiment, the comparable industrial environment may be a simulated industrial environment comprising simulation models of the industrial assets and the industrial environment. The simulated industrial environment may be configured to simulate various operating conditions of the industrial assets to generate the training dataset comprising at least the normal datapoints.

The method may include training the anomaly detection models based on the training data set comprising the normal datapoints. Accordingly, the present invention avoids time-consuming retraining of the anomaly detection models. Further, the present invention envisages a scenario where only a limited number of normal datapoints are available to detect abnormal datapoints in the operation data. The method steps disclosed herein provide a mechanism to detect abnormal datapoints even though only a limited number of normal datapoints are known.

In an embodiment, the method may include determining a confidence index in the classification of the subset-datapoints based on at least one of the engineering software inputs and operations of the comparable industrial environment. The method may also include re-classifying the subset-datapoints when a confidence threshold is not satisfied and updating the training dataset with the confidence index and the re-classified datapoints. The present invention provides a mechanism of validating the classification of the subset-datapoints or the new datapoints through the determination of the confidence index. For example, the difference between the datapoint classified as normal and the datapoints within boundary conditions set by the automation engineer may be used to determine the confidence index. Accordingly, the present invention does not suffer from over-fitting the classification to the training dataset. At the same time, the confidence threshold is used to ensure that the classification is based on the training dataset. Further, the present invention limits manual intervention by an expert. For example, the expert input may be provided for the datapoints that require re-classification.

In an embodiment, the anomaly detection models may be contained in an anomaly detection pipeline. As used herein "anomaly detection pipeline" refers to an iterative selection and implementation of the anomaly detection models within the pipeline. The anomaly detection pipeline is therefore implemented as an iterative workflow of training, classification and retraining, wherein the anomaly detection models are trained with the training dataset, wherein the anomaly detection models are validated based on classification of the normal datapoints and the abnormal datapoints and wherein the anomaly detection models are retrained based on the updated training dataset. The present invention proposes a streamlined methodology to continuously detect abnormal datapoints in the operation data of the industrial assets. Further, the selection of the anomaly detection models ensures that the most suitable model is chosen for detecting abnormal datapoints.

The method may include generating the anomaly detection pipeline containing the anomaly detection models associated with the industrial environment, wherein the anomaly detection models comprise physics-based models, data-driven models and a combination thereof. The anomaly detection pipeline may be generated by selecting the anomaly detection models according to a deviation score or an anomaly score or an accuracy score. The method may include determining the deviation score for the anomaly detection models based on properties of the anomaly detection models. In an embodiment, the deviation score is also determined based on the training dataset. The method may further include enabling selection of at least one anomaly detection model for the anomaly detection pipeline based on the deviation score. In an embodiment, the outputs of the anomaly detection models are compared to select one model or determine if a combination of the anomaly detection models leads to a robust ensemble. The anomaly detection pipeline advantageously includes a set of robust anomaly detection models along with the training dataset which is then updated and retrained.

In an embodiment of the present invention, the method may include detecting a batch of abnormal datapoints in the operation data using the anomaly detection pipeline, wherein detecting the batch of abnormal datapoints comprises applying the anomaly detection pipeline to at least one subset of the batch and iteratively on all subsets of the batch, wherein the anomaly detection pipeline trained based on the training dataset consisting of the normal datapoints; classifying the subset-datapoints in the subset as one of the normal datapoints and the abnormal datapoints using the anomaly detection pipeline; enlarging the training dataset at least with the normal datapoints; and retraining the anomaly detection pipeline with the updated training dataset after expiration of the threshold time, wherein the threshold time is based on the number of updates to the training dataset.

The present invention may be used to advantageously detect a batch of abnormal datapoints. By detecting the batch a context to the abnormal datapoints may be determined. The context may then be updated to the anomaly dataset to make the retraining of the models in the anomaly detection pipeline more robust.

The system, device and method of the present invention have the technical effect of reducing engineering effort and time of anomaly detection. The technical effect is achieved because of the reduced effort in labelling the operation data. In addition to the reduced labeling effort, the detection of abnormal datapoints can be performed with lower time to wait for anomalies to be detected in production. The training dataset with the normal datapoints is used to detect abnormal datapoints in the subset. Therefore, the present invention is suitable to be implemented in real-time and in newly commissioned industrial environments.

The technical effect is achieved by the anomaly detection models that are applied on the operation data that may be time series. For example, the anomaly detection models may be frequency transformation, time series statistics such as mean, median, standard deviation and windowing. Further, the threshold time for retraining the anomaly detection models ensures computational efficiency for implementation in a real production setting and allows an automation engineer to give input. For example, the automation engineer may need to distinguish the normal working state and abnormal ones based on their experiences. With multiple industrial assets in an industrial environment, the effectiveness of the automation engineer may be limited. Also, detecting abnormal datapoints may be time-consuming and with heavy human labor. With the assistance of the generalized anomaly detection pipeline, majority vote of the classification models is performed autonomously and automatically. In this semi-automated method, an automation engineer optionally gives feedback after a defined number of iterations of the classified datapoints while the classification may still continue running in the background. Furthermore, the update of the training dataset and anomaly dataset with the normal datapoints and the abnormal datapoints avoids the requirement of pre-classified datasets or a description of a specific class. In addition, generation of the anomaly detection pipeline through selection of the anomaly detection models based on model properties and deviation score enables a streamlined iterative workflow of training, validation and retraining.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.

Fig. 1    illustrates method steps of a method of detecting abnormal datapoints in unlabeled operation data, according to an embodiment of the present invention;

Fig. 2    illustrates a flow diagram of a method of detecting abnormal datapoints in time series operation data, according to an embodiment of the present invention;

Fig. 3    illustrates a flow diagram of a method of iteratively detecting abnormal datapoints according to an embodiment of the present invention;

Fig. 4    illustrates majority voting of several anomaly detection model according to an embodiment of the present invention;

Fig. 5    illustrates a method steps of a method of detecting abnormal datapoints in operation data associated with an industrial environment, according to an embodiment of the present invention; and

Fig. 6.    illustrates a predictive maintenance system and a computing device for detecting abnormal datapoints in operation data associated with the industrial environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

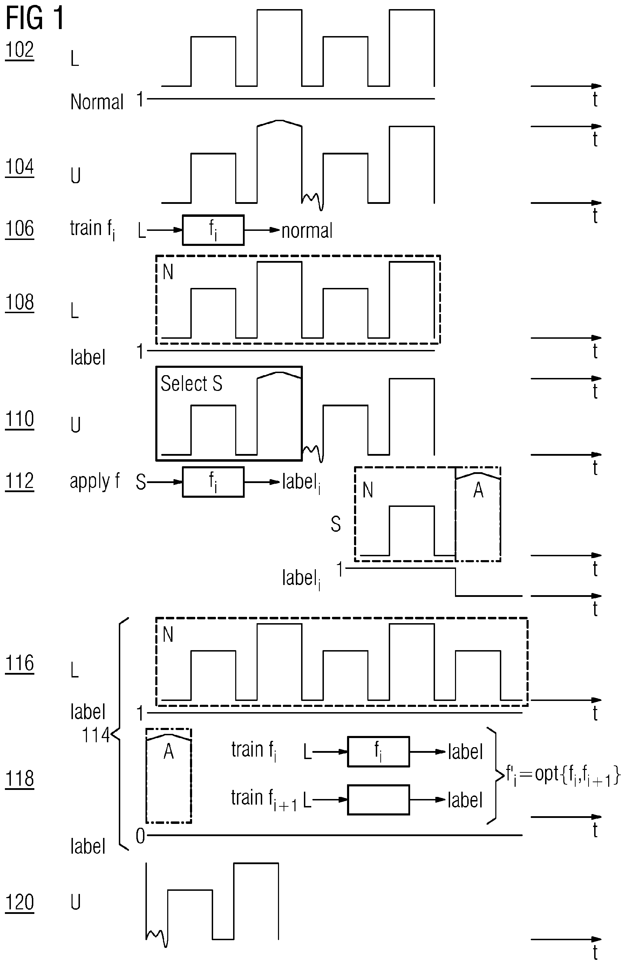

Fig. 1 illustrates method steps of a method of detecting abnormal datapoints in unlabeled operation data U, according to an embodiment of the present invention. The operation data U is associated with an industrial environment and may be generated based on operation of industrial assets in the industrial environment.

The method begins in a first iteration i=1 at step 102 with the receipt/determination of a reference normal dataset L. For example, the reference normal dataset L may be received as measurements of comparable industrial assets in comparable industrial environments. In another example, the reference normal dataset L may be generated based on simulations of the industrial environment. The reference normal dataset L is used as a training dataset for anomaly detection models. Hereinafter, the training dataset will be referred to as the training dataset L.

At step 104, the unlabeled operation data U is received. The unlabeled operation data U may be received in time series or as a batch file that may not be in continuous time series. The operation data U is a dataset/data stream in which abnormal datapoints are detected.

At step 106, an anomaly detection model $f_i$ is trained based on the training dataset L. Based on the training, the anomaly detection model is configured to classify datapoints as normal datapoints. At step 108, the anomaly detection model $f_i$ is applied to the training dataset to validate the classification as normal datapoints.

At step 110, a subset S is selected from the operation data U. At step 112, the anomaly detection model $f_i$ is applied to the subset S to generate classified datapoints ($label_i$) that are labeled as one of normal datapoints N or abnormal datapoints A. In an embodiment, the classified datapoints $label_i$ are illustrated as in a trend of 1 and 0, where 1 indicates normal datapoints and 0 indicates abnormal datapoints.

At step 116, the training dataset is enlarged with the normal datapoints classified at step 112. Further, at step 118, an anomaly dataset is generated with the abnormal datapoints identified at step 112. In an embodiment, the steps 116 and 118 may be collectively referred to as enlarging the training dataset and is indicated by step 114. In addition to enlarging the training dataset, at step 118 the anomaly detection model $f_i$ is retrained based on the enlarged training dataset. The retrained anomaly detection model for the next iteration i+1 is referred as $f_{i+1}$. In an embodiment, the retrained anomaly detection model $f'_i$ is generated according to the application of an optimization function of anomaly detection models $f_i$ and $f_{i+1}$ in iterations i and i+1 $f'_i = opt\{f_i, f_{i+1}\}$. At step 120, the subset S is removed from the operation data U and the steps 110-118 are repeated with the retrained anomaly detection model $f'_i$.

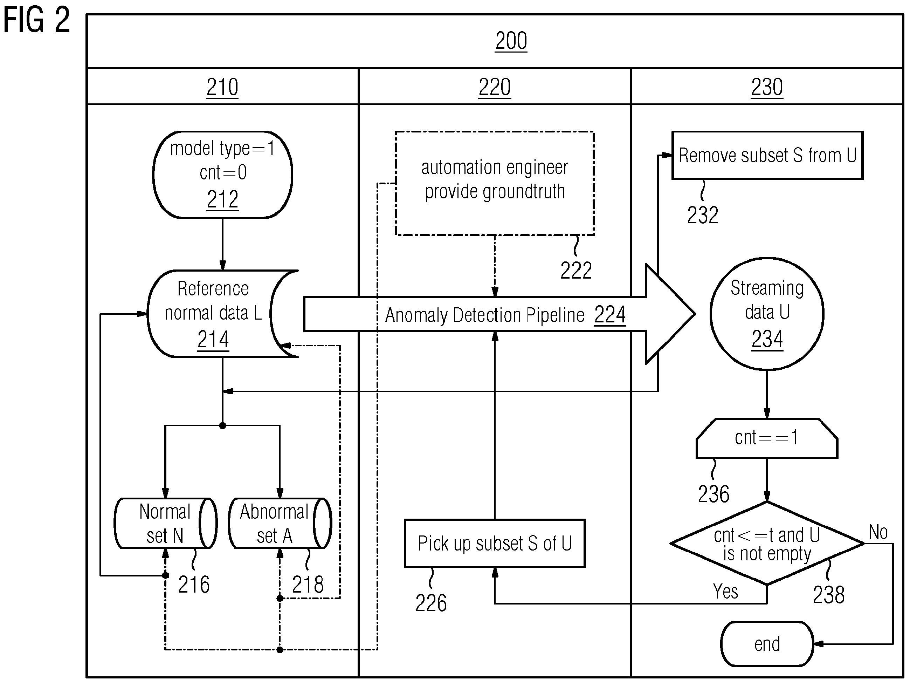

Fig. 2 illustrates a flow diagram of a method 200 of detecting abnormal datapoints in time series operation data U, according to an embodiment of the present invention. For the purpose of Fig. 2, time series operation data U and operation data U have been used interchangeably. The method 200 is divided into three stages 210, 220 and 230. At stage 210 supervised learning is performed. At stage 220, industrial validation may be performed. At stage 230, unsupervised learning and reinforced learning is performed. The stages 210-230 are described hereinafter in accordance with the flow diagram.

At the supervised learning stage 210, the anomaly detection model is selected as part of an anomaly detection pipeline, and its parameters are initialized. For example, the anomaly detection model is an Isolation Forest model. At step 212, the selection of the Isolation Forest model is indicated by model type=1. Further, at step 212 a counter is initialized as cnt=0. At step 214, the training dataset L is received, and the Isolation Forest model is trained based on the training dataset L. The training dataset L includes normal datapoints N and abnormal datapoints A. The normal datapoints N are incorporated in the training dataset L at step 216. In an embodiment, the abnormal datapoints A are incorporated in the training dataset at step 218.

At the validation stage 220, domain experts may provide inputs to validate the classification of the normal datapoints N and the abnormal datapoints A. For example, at step 222 an automation engineer may provide ground-truth to validate the classification. At step 224 the anomaly detection pipeline is applied on the operation data U iteratively. At step 226, a subset S is picked from the operation data U and the anomaly detection pipeline is applied. The subset S is picked according to the time order. Accordingly, the leftmost block of the time-series operation data U is picked. Therefore, the earliest time block is the subset S and is input for classification in the first round.

At the unsupervised learning stage 230, the anomaly detection pipeline is applied on series of subsets of the operation data U. At predetermined time steps the anomaly detection pipeline is reinforced with an enlarged normal dataset. At step 232, the subset S is removed from the operation data U when the classification is completed by the application of the anomaly detection pipeline. At step 234, time-series operation data from the industrial assets is received in real-time. At step 236, the counter cnt is incremented. At step 238, the counter cnt is checked to confirm whether the counter cnt value is less than threshold time. Additionally, it is checked if the time series operation data U is not empty. If any of the checks are positive, a new subset is picked from the operation data U and the method continues from step 224.

The stage 230 is also the reinforcement stage. The reinforcement is performed by enlarging the training dataset L and retraining the anomaly detection pipeline. The reinforcement enables the anomaly detection pipeline to be robust and extends its generalizability through retraining.

The method 200 may be coded as follows.

**Input:** Data: *L* reference normal dataset as the training dataset; Data: *M* empty dataset to be populated as abnormal dataset ; Data: *U* time series operation data; Threshold time: *t* the constraint to reinforce the trained model; Model: *f* model selected as part of the anomaly detection pipeline.

**Output:** A collection of normal datapoints and abnormal datapoints. Where each set contains: *M* detected anomalies, *L* enlarged normal dataset, and *f* robust anomaly detection model.

```
1. for f in model types do in parallel:
2.      Train f on L.
3.         cnt = 0
4.         Initialize empty sets: abnormal set A, normal set N,
5.         While (U is not empty) and (industrial asset is not
interrupted) do:
6.                    While (cnt <= t) and (U is not empty) do:
7.               Pick up subset S of U
8.                    Apply f to the subset S; add detected
             abnormal datapoints to A, and add detected
             normal    datapoints    to    N;    Add    N
             to L; Add A to M
9.                    Remove subset S from U;
10.                   cnt += 1
11.                   if (cnt == t) then:
12.                   Train f from L

13.              end
14.                      cnt = 0
15.         End
```

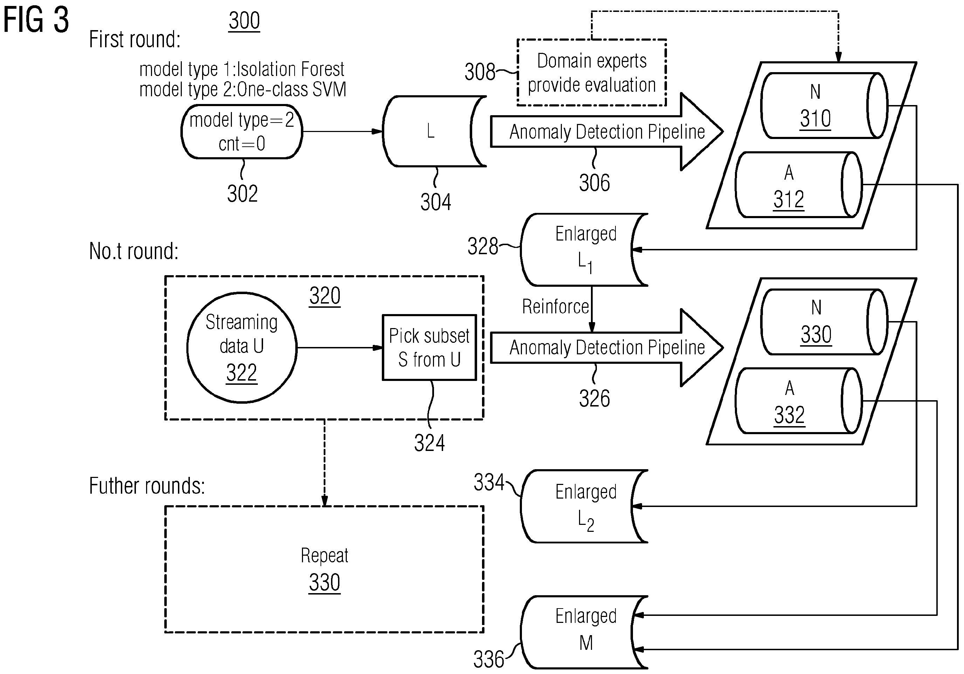

Fig. 3 illustrates a flow diagram of a method 300 of iteratively detecting abnormal datapoints according to an embodiment of the present invention where t=1. The method 300 illustrates operation of the present invention when the time series operation data U is received. The method 300 begins at step 302 with selection of a one class Support Vector Machine (SVM) as part of the anomaly detection pipeline. Further, at step 302, the counter cnt is initialized.

At step 304, the training dataset L is used to train the one class SVM model. At step 306, the anomaly detection pipeline is applied to the operation data U and classifies datapoints in the subset S as normal datapoints N and abnormal datapoints A. At step 308, a domain expert may validate the classification. At step 310, the normal datapoints N are incorporated in the training dataset to generate the enlarged training data $L_1$. At step 312, the abnormal datapoints A are updated to an anomaly dataset M.

The aforementioned steps are repeated as the operation data U streams in at round 320. Accordingly, at step 322 the operation data U is streamed, and a new subset is picked at step 324. The anomaly detection pipeline is retrained/reinforced with the enlarged training dataset $L_1$. The steps 330 and 332 are repetition of steps 310 and 312. Further rounds 330 is as indicated above.

The method 300 may be repeated steps until the operation data U is no longer streamed or the industrial asset operation is interrupted. For example, if a motor is stopped. When the steps are complete, the outcome will be enlarged training dataset $L_2$ and enlarged anomaly dataset M. Further, the anomaly detection pipeline will include robust models for the industrial asset. Addition usages of enlarged datasets $L_2$ and M may include clustering operation data from a comparable industrial asset.

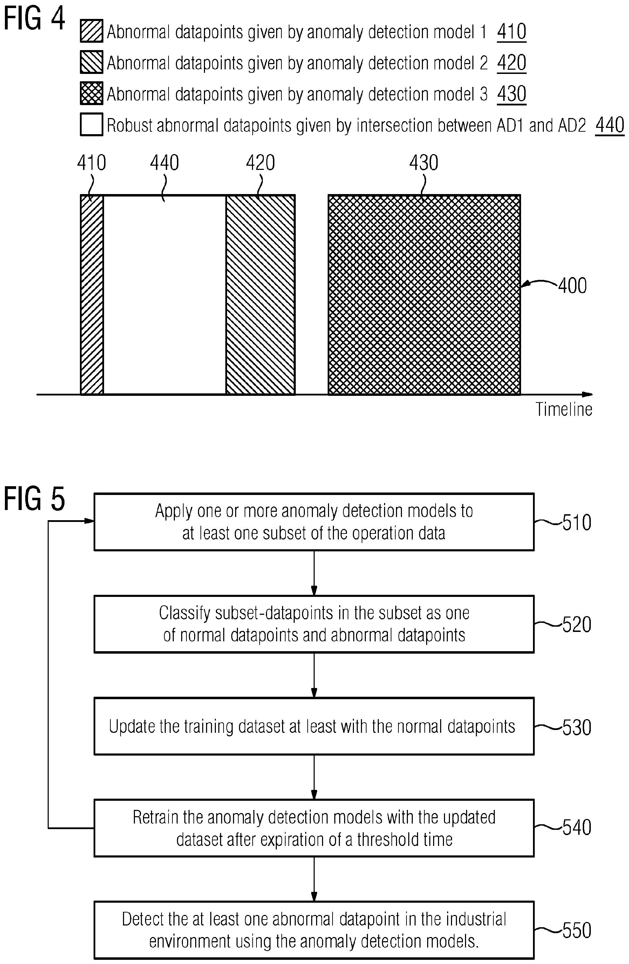

Fig. 4 illustrates majority voting for labeling of the unlabeled subset S in normal N and abnormal A datasets when several anomaly detection models i=1,...N are available in the ith step. Only when the majority of models indicate that unlabeled data is abnormal in this time region 440 is this data labeled robustly abnormal. In other cases when only one out of three anomaly detection models indicates abnormal behavior the data S is considered as normal at these time regions 410 - 430. As indicated in the description hereinabove, the method of the present invention results in an enlarged training dataset $L_2$ and enlarged anomaly dataset M. Further, the anomaly detection pipeline will include robust models for the industrial asset.

In Fig. 4, the abnormal datapoints output by different anomaly detection models are illustrated on a graph. 410 illustrates the abnormal datapoints AD1 detected by the anomaly detection model 1. 420 illustrates the abnormal datapoints AD2 detected by the anomaly detection model 2. 430 illustrates the abnormal datapoints AD3 detected by the anomaly detection model 3. The abnormal datapoints AD1 and AD2 overlap with each other. However, AD3 does not overlap with AD1 and AD2. The abnormal datapoints AD1 and AD2 are identified as robust abnormal datasets and the corresponding anomaly detection models 1 and 2 are identified as robust models which can be used in an ensemble in the anomaly detection pipeline.

Fig. 5 illustrates steps of a method of detecting abnormal datapoints in operation data associated with an industrial environment, according to an embodiment of the present invention.

The method begins at step 510 by applying one or more anomaly detection models to at least one subset of the operation data. The anomaly detection models are trained based on the training dataset. The training dataset initially includes datapoints labelled as normal. Accordingly, step 510 includes training the anomaly detection models based on the training dataset. The training dataset may be provided with the normal datapoints based on actions performed by an expert. Accordingly, the step 510 may include receiving the training data set comprising at least the normal datapoints, wherein the normal datapoints are classified based on at least one of engineering software input and operation of a comparable industrial environment.

When the anomaly detection models are applied to the subset of the operation data, classification of datapoints within the subset is possible. Step 520 includes classifying subset-datapoints in the subset normal datapoints or abnormal datapoints. The classification of the subset-datapoints enables labelling of unlabeled datapoints in the operation data.

In an embodiment, step 520 may include determining confidence index in the classification of the subset-datapoints based on at least one of the engineering software input and operation of the comparable industrial environment. The method may also include re-classifying the subset-datapoints when a confidence threshold is not satisfied and updating the training dataset with the confidence index and the re-classified datapoints. The present invention provides a mechanism of validating the classification of the subset-datapoints or the new datapoints through the determination of the confidence index. For example, the difference between the datapoint classified as normal and the datapoints within boundary conditions set by the automation engineer may be used to determine the confidence index. Further, the expert input may be provided for the datapoints that require re-classification.

The labelling provides new training data for the anomaly detection models. Accordingly, step 530 includes updating the training dataset with at least the normal datapoints. Step 530 may also include populating an anomaly dataset containing the abnormal datapoints in the subset and the new subset. The anomaly dataset may be populated after classification of the datapoints in the subset of the new subset. The update of the training dataset may be performed iteratively. The iterative population of the anomaly dataset enables continuous learning and retraining of the anomaly detection models.

When an iterative threshold i.e. the threshold time is satisfied the anomaly detection models are retrained based on the updated training dataset. Step 540 includes retraining the anomaly detection models with the updated training dataset after expiration of the threshold time. The retraining of the anomaly detection models reinforces the classification performed on the subset-datapoints. Step 550 includes detecting the abnormal datapoint in the operation data based on the application of the retrained anomaly detection models.

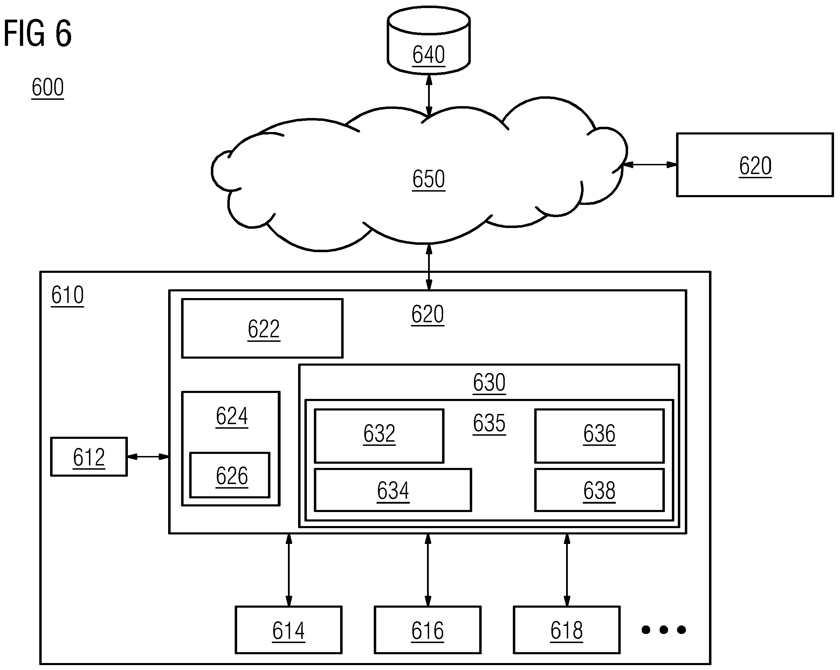

Fig. 6. illustrates a predictive maintenance system 600 and computing devices 620 and 620' for detecting abnormal datapoints in operation data associated with an industrial environment 610, according to an embodiment of the present invention. The industrial environment 610 includes multiple industrial assets 612-618. The industrial assets may include a motor 612, a rotor 614, a conveyor belt 616 and a gearbox 618. The industrial assets 612 to 618 may be provided with sensors configured to measure the respective operating parameters.

In an embodiment, the computing device 620 is located within the industrial environment 610. For example, the computing device 620 may be an edge computing device. The edge computing device 620 may be light weight, low cost devices which collect data from various sensors deployed in the industrial environment 610, store and buffer the collected data (i.e. operation data of the industrial assets 612-618), conduct analysis of the collected data, and perform an action (e.g., issuing a control command) based on the outcome of analysis. In the present invention, the analysis performed by the edge computing device 620 is the detection of abnormal datapoints in the operation data.

In another embodiment, the computing device 620' may be hosted on an IOT platform 650. The IOT platform 650 may include a cloud computing platform, a fog/edge computing platform or a combination of both. In an embodiment the IOT platform 650 serves as a host on which the computing device 620' is implemented. The IOT platform 650 includes distributed compute resources distributed and connected by means of a communication network.

As used herein, "cloud computing" refers to a processing environment comprising configurable computing physical and logical resources, for example, networks, servers, storage, applications, services, etc., and data distributed over the network, for example, the internet. The cloud computing system provides on-demand network access to a shared pool of the configurable computing physical and logical resources. The network is, for example, a wired network, a wireless network, a communication network, or a network formed from any combination of these networks.

As used herein "fog computing" or edge computing enables the IOT platform to be realized closer to the automation environment. Fog/edge computing extends the cloud computing to the physical location of the devices belonging to the automation network. It may be a combination of multiple edge devices 620 that are configured to execute the operation of the IOT platform 650.

The predictive maintenance system 600 includes the computing devices 620 and 620', the IOT platform 650 and a database 640. The database 640 is configured to store historical operation data of the industrial assets 612-618. The historical operation data refers to data collected from the sensors in the industrial environment 610 and stored in the database 640 or in the computing device 620. Further, the database 640 may also include training datasets associated with the industrial environments. Furthermore, the database 640 may be configured to store simulation models associated with the industrial environment 610 and the industrial assets 612-618.

The computing devices 620 and 620' may include comparable hardware/software modules to implement the present invention. The following description is with regard to the edge device 620. The edge device 620 includes a processing unit 622, a display 624 configured to receive a user input and display an output based on commands from the processing unit 622 and memory 630 communicatively coupled to the processing unit 622. Although not illustrated in Fig 6, one would understand that the edge device 620 may also comprise power modules, communication interfaces, etc. The processing unit 622 is configured to execute the modules stored in the memory 630. The display 624 is configured to display a Graphical User Interface (GUI) 626, to enable an automation engineer/expert to interact with the edge device 620.

The memory 630 includes an anomaly module 635 that when executed enables the edge device 620 to detect abnormal datapoints in the operation data. The anomaly module 635 includes a training module 632, a labelling module 634, an update module 636 and retraining module 638.

In operation, the edge device 620 receives operation data from the sensors associated with the industrial assets 612-618 via the communication interfaces. Further, the edge device 620 extracts the training dataset stored in the database 640. The training module 632 is configured to train one or more anomaly detection models generated from the simulation models in the database 640. The training is based on the training dataset extracted from the database 640. The training dataset includes normal datapoints that have been validated based on operation of the comparable industrial environment.

In an embodiment, the anomaly detection models are selected to form an anomaly detection pipeline. The anomaly detection pipeline is implemented as an isolated workflow of training, classification and retraining. The training module 632 may be configured to generate the anomaly detection pipeline containing the anomaly detection models based on a deviation score determined for each of the anomaly detection models. The deviation score is determined based on the properties of the anomaly detection models and indicates the accuracy of each of the anomaly detection models.

The labelling module 634 is configured to classify datapoints within a subset of the operation data. The datapoints within the subset are referred to as subset-datapoints. The subset-datapoints are classified as either the normal datapoints or abnormal datapoints using the anomaly detection models. In an embodiment, the labelling module 634 is further configured to determine a confidence index in the classification of the subset-datapoints based on the simulation models or operation of the comparable industrial environment. The labelling module 634 may be configured to classify the subset datapoints when a confidence threshold is not satisfied. For example, the confidence threshold may be a predefined value that an automation engineer may set using the GUI 626 to ensure that the quality of the classification does not fall beyond the predefined value. In another embodiment, the automation engineer may re-classify the datapoints that do not satisfy the confidence threshold.

The update module 636 is configured to update the training dataset with the newly classified normal datapoints in the subset. In an embodiment, the training dataset may also be updated with the confidence index and the re-classified datapoints. The update module 636 is configured to populate an anomaly dataset containing the abnormal datapoints in the subset. In an embodiment, the training dataset may be updated with the anomaly dataset. The update module 636 is configured to determine a threshold time based on the number of updates performed to the training dataset.

When the threshold time expires, the retraining module 638 is configured to retrain the anomaly detection models with the updated training dataset. Further, the retraining module 638 extracts a new subset from the operation data and applies the retrained anomaly detection models to a new subset of the operation data. Thereafter, the labelling module 634 is configured to classify new-datapoints in the new subset as the normal datapoints or the abnormal datapoints. Based on the classification, the anomaly module 635 is configured to iteratively detect the abnormal datapoints in the operation data. In an embodiment, the anomaly module 635 is configured to detect a batch of abnormal datapoints in the operation data.

The present invention can take a form of a computer program product comprising program modules accessible from computer-usable or computer-readable medium storing program code for use by or in connection with one or more computers, processors, or instruction execution systems. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation medium in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

**Claims**

1. A method of detecting at least one abnormal datapoint in operation data (U) associated with an industrial environment (610), wherein the operation data (U) comprises historical data and streaming data corresponding to operation of industrial assets (612-618) in the industrial environment (610), the method comprising:

   applying one or more anomaly detection models (fi) to at least one subset (S) of the operation data (U), wherein the anomaly detection models (fi) are trained based on a training dataset (L) consisting of datapoints labeled as normal;
   classifying subset-datapoints in the subset (S) as one of normal datapoints (N) and abnormal datapoints (A) using the anomaly detection models (fi);
   updating the training dataset at least with the normal datapoints;
   retraining the anomaly detection models (fi) with the updated training dataset after expiration of a threshold time, wherein the threshold time is based on the number of updates to the training dataset; and
   detecting the at least one abnormal datapoint in the operation data (U) using the anomaly detection models (f'i).

2. The method according to claim 1, further comprising:

   removing the subset from the operation data (U);
   detecting the at least one abnormal datapoint in remainder operation data (U) without the subset using the retrained anomaly detection models (fi);
   applying the retrained anomaly detection models (fi) to a new subset of the operation data (U) and classifying new-datapoints in the new subset as one of the normal datapoints (N) and the abnormal datapoints (A); and
   updating the training dataset and retraining the retrained anomaly detection models (f'i) according to claim 1.

3. The method according to one of claim 1 and claim 2, further comprising:
   populating an anomaly dataset containing the abnormal datapoints in the subset and the new subset.

4. The method according to claim 3, further comprising:
   updating the training dataset with the anomaly dataset.

**5.** The method according to claim 1, further comprising:

receiving the training dataset (L) comprising at least the normal datapoints, wherein the normal datapoints are classified based on at least one of an engineering software input and operation of a comparable industrial environment; and
training the anomaly detection models (fi) based on the training dataset (L) comprising the normal datapoints.

**6.** The method according to claim 1, further comprising:

determining confidence index in the classification of the subset-datapoints based on at least one of an engineering software input and operation of a comparable industrial environment;
re-classifying the subset-datapoints when a confidence threshold is not satisfied; and
updating the training dataset with the confidence index and the re-classified datapoints.

**7.** The method according to one of the preceding claims, wherein the one or more anomaly detection models (fi) are contained in an anomaly detection pipeline (224, 306, 326), wherein the anomaly detection pipeline (224, 306, 326) is implemented as an iterative workflow of training, classification and retraining, wherein the anomaly detection models (fi) are trained with the training dataset, wherein the anomaly detection models (fi) are validated based on classification of the normal datapoints and the abnormal datapoints and wherein the anomaly detection models (fi) are retrained based on the updated training dataset.

**8.** The method according to claim 7, further comprising:

generating the anomaly detection pipeline (224, 306, 326) containing the anomaly detection models (fi) associated with the industrial environment (610), wherein the anomaly detection models (fi) comprise physics-based models, data-driven models and a combination thereof; and
determining a deviation score for the anomaly detection models (fi) based on properties of the anomaly detection models (fi).

**9.** The method according to claim 8, wherein generating the anomaly detection pipeline (224, 306, 326) further comprises:
enabling selection of at least one anomaly detection model for the anomaly detection pipeline (224, 306, 326) based on the deviation score.

**10.** The method according to one of the preceding claims, further comprising:
detecting a batch of abnormal datapoints in the operation data (U) using the anomaly detection pipeline (224, 306, 326), wherein detecting the batch of abnormal datapoints comprises:

applying the anomaly detection pipeline (224, 306, 326) to at least one subset of the batch, wherein the anomaly detection pipeline (224, 306, 326) trained based on the training dataset consisting of the normal datapoints;
classifying the subset-datapoints in the subset as one of the normal datapoints and the abnormal datapoints using the anomaly detection pipeline (224, 306, 326);
enlarging the training dataset at least with the normal datapoints; and
retraining the anomaly detection pipeline (224, 306, 326) with the updated training dataset after expiration of the threshold time, wherein the threshold time is based on the number of updates to the training dataset.

**11.** A computing device (620, 620') for detecting at least one abnormal datapoint in operation data (U) associated with an industrial environment (610), wherein the operation data (U) comprises historical data and streaming data corresponding to operation of industrial assets (612-618) in the industrial environment (610), the device comprising:

a processing unit (622); and
an anomaly module (635) executable by the processing unit comprising computer-readable instructions when executed by the processing unit (622) is configured to perform the steps in one of the method claims 1-10.

**12.** A predictive maintenance system (600) for an industrial environment (610), the system comprising the computing device according to claim 11.

**13.** A computer-readable medium, having machine-readable instructions stored therein, that when executed by a processor cause the processor to perform method steps according to any of the claims 1-10.

# FIG 1

102   L

Normal   1     t

104   U     t     t

106   train $f_i$   L $\longrightarrow$ $f_i$ $\longrightarrow$ normal

108   L

N

label   1     t     t

110   U   Select S     t

112   apply f   S $\longrightarrow$ $f_i$ $\longrightarrow$ $label_i$

N   A

S

$label_i$   1     t     t

116   L

N

label   1     t

114

A   train $f_i$   L $\longrightarrow$ $f_i$ $\longrightarrow$ label

118   train $f_{i+1}$   L $\longrightarrow$ $\longrightarrow$ label   $\left.\right\}$ $f^t_i = opt\{f_i, f_{i+1}\}$

label   0     t

120   U     t

# FIG 2

**200**

| **210** | **220** | **230** |
|---|---|---|

**210:**
- model type=1 cnt=0 **212**
- Reference normal data L **214**
- Normal set N **216**
- Abnormal set A **218**

**220:**
- automation engineer provide groundtruth **222**
- Anomaly Detection Pipeline **224**
- Pick up subset S of U **226**

**230:**
- Remove subset S from U **232**
- Streaming data U **234**
- cnt==1 **236**
- cnt<=t and U is not empty **238** — Yes / No
- end

EP 3 955 076 A1

# FIG 3

EP 3 955 076 A1

**First round:** _300_

model type 1:Isolation Forest
model type 2:One-class SVM

model type=2
cnt=0

_302_

L

_304_

_308_ Domain experts provide evaluation

Anomaly Detection Pipeline

_306_

N
_310_

A
_312_

**No.t round:**

_328_ Enlarged L$_1$

_320_

Streaming data U
_322_

Pick subset S from U

_324_

Reinforce

Anomaly Detection Pipeline

_326_

N
_330_

A
_332_

**Futher rounds:**

_334_ Enlarged L$_2$

Repeat
_330_

_336_ Enlarged M

# FIG 4

▨ Abnormal datapoints given by anomaly detection model 1  410

▧ Abnormal datapoints given by anomaly detection model 2  420

▩ Abnormal datapoints given by anomaly detection model 3  430

☐ Robust abnormal datapoints given by intersection between AD1 and AD2  440

Timeline

# FIG 5

Apply one or more anomaly detection models to at least one subset of the operation data — 510

Classify subset-datapoints in the subset as one of normal datapoints and abnormal datapoints — 520

Update the training dataset at least with the normal datapoints — 530

Retrain the anomaly detection models with the updated dataset after expiration of a threshold time — 540

Detect the at least one abnormal datapoint in the industrial environment using the anomaly detection models. — 550

FIG 6

600

Europäisches
Patentamt

European
Patent Office

Office européen
des brevets

# EUROPEAN SEARCH REPORT

**Application Number**

EP 20 19 0284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/138655 A1 (NIPPON TELEGRAPH & TELEPHONE [JP]) 18 July 2019 (2019-07-18) * the whole document * & US 2020/334578 A1 (IKEDA YASUHIRO [JP] ET AL) 22 October 2020 (2020-10-22) * paragraph [0025] - paragraph [0039] * * paragraph [0041] * * paragraph [0061] - paragraph [0069] * * paragraph [0081] - paragraph [0086] * * paragraph [0088] * * paragraph [0093] - paragraph [0094] * * paragraph [0098] - paragraph [0103] * * figures 1,2,6, 8-11 * ----- | 1,2, 11-13 | INV. G05B23/02 |

TECHNICAL FIELDS
SEARCHED      (IPC)

G05B

~~The present search report has been drawn up for all claims~~

| Place of search | Date of completion of the search | Examiner |
|---|---|---|
| Munich | 26 January 2021 | Marrone, Fabrizio |

EPO FORM 1503 03.82 (P04C01)

Europäisches
Patentamt
European
Patent Office
Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 11-13

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

Application Number

EP 20 19 0284

The Search Division considers that the present European patent application does not comply with the
requirements of unity of invention and relates to several inventions or groups of inventions, namely:

```
1. claims: 1, 2, 11-13

        effective application of the anomaly detection models
                    ---

2. claims: 3, 4

        improving the robustness of the model
                    ---

3. claims: 5, 6

        seamless incorporation of expert and existing input without
        explicit prompt
                    ---

4. claims: 7-10

        selecting the most suitable model for detecting abnormal
        datapoints
                    ---
```

**ANNEX TO THE EUROPEAN SEARCH REPORT
ON EUROPEAN PATENT APPLICATION NO.**

EP 20 19 0284

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2021

| Patent document cited in search report | Publication date | Patent family member(s) | Publication date |
|---|---|---|---|
| WO 2019138655 A1 | 18-07-2019 | JP WO2019138655 A1<br>US 2020334578 A1<br>WO 2019138655 A1 | 14-01-2021<br>22-10-2020<br>18-07-2019 |

EPO FORM P0459

For more details about this annex : see Official Journal of the European Patent Office, No. 12/82